Europäisches Patentamt

European Patent Office

Office européen des brevets

(19)

(11) **EP 0 775 523 B1**

(12) **FASCICULE DE BREVET EUROPEEN**

(45) Date de publication et mention
de la délivrance du brevet:
**02.05.2002 Bulletin 2002/18**

(51) Int Cl.⁷: **B01J 37/00**, F01N 3/28,
C04B 38/06, B01J 2/20

(21) Numéro de dépôt: **96402454.1**

(22) Date de dépôt: **15.11.1996**

(54) **Procédé de fabrication d'un convertisseur catalytique**

Verfahren zur Herstellung eines katalytischen Konverters

Process for the manufacture of a catalytic converter

(84) Etats contractants désignés:
**DE ES FR GB IT**

(30) Priorité: **21.11.1995 FR 9513810**

(43) Date de publication de la demande:
**28.05.1997 Bulletin 1997/22**

(73) Titulaire: **ECIA - EQUIPEMENTS ET
COMPOSANTS
POUR L'INDUSTRIE AUTOMOBILE
F-25400 Audincourt (FR)**

(72) Inventeurs:
• **Sarda, Christian
31000 Toulouse (FR)**
• **Dareys, Sophie
31000 Toulouse (FR)**
• **Alphonse, Pierre
31500 Toulouse (FR)**
• **Rousset, Abel
31520 Ramonville Saint Agne (FR)**

(74) Mandataire:
**Habasque, Etienne Joel Jean-François et al
Cabinet Lavoix
2, Place d'Estienne d'Orves
75441 Paris Cédex 09 (FR)**

(56) Documents cités:
**EP-A- 0 218 014          EP-A- 0 452 619
EP-A- 0 490 226          EP-A- 0 545 008
EP-A- 0 629 438          DE-A- 3 524 650
FR-A- 1 337 254          FR-A- 2 587 989
US-A- 3 267 045          US-A- 3 799 888
US-A- 3 856 708          US-A- 3 894 968
US-A- 4 253 988          US-A- 5 004 709**

• **REVUE DE L'INSTITUT FRANCAIS DU
PETROLE, vol. 29, no. 6, 1974, PARIS FR, pages
861-877, XP002010642 COUTY PH. & DUHAUT
P.: "Procédés de mise en forme des catalyseurs"**
• **DATABASE WPI Section Ch, Week 8420 Derwent
Publications Ltd., London, GB; Class A97, AN
84-122825 XP002011111 & JP 59 057 949 A
(IBIDEN CO LTD) , 3 Avril 1984**
• **Génie et procédés chimiques, Léger
Jean-Etienne, Techiques de l'Ingénieur, 1965, p.
2730-7 et 2730-8.**

**Description**

La présente invention concerne un procédé de fabrication d'un convertisseur catalytique.

Il est connu par le document US-A-3,267,045 de préparer des catalyseurs à base d'oxyde métallique (ou d'un mélange de tels oxydes) en utilisant le procédé suivant. On dissout un ou plusieurs métaux catalytiques du groupe VIII ou des sous-groupes B des groupes I et II de la classification périodique des éléments dans un acide. On précipite à partir de cette solution un ou des carbonates métalliques par addition d'ammoniac et de $CO_2$. On isole et lave le précipité, puis on le chauffe entre 300 et 500°C pour former les oxydes métalliques. On mélange à sec les oxydes avec un matériau organique d'aide au frittage. On forme des boulettes de ce mélange, et on les chauffe entre 500 et 1300°C pendant 1 à 10 heures pour obtenir leur frittage sous forme de boulettes ayant la résistance et la densité (1,75 à 3,25) requises.

Dans l'industrie automobile, il est connu d'agencer des convertisseurs catalytiques dans les lignes d'échappement des véhicules pour réduire les polluants émis dans l'atmosphère. Ces convertisseurs sont généralement placés dans des pots de détente des lignes d'échappement.

On connaît déjà dans l'état de la technique un convertisseur catalytique comprenant, d'une part, un support, notamment alvéolé, en céramique ou métallique, revêtu d'une mince couche d'alumine (wash coat) permettant d'augmenter la surface spécifique du support, et, d'autre part, un revêtement de métaux précieux formant la phase active du catalyseur.

Ce type de convertisseur catalytique est relativement coûteux et pose des problèmes de recyclage.

EP-A-0 452 619 décrit un convertisseur catalytique du type comprenant une masse poreuse de céramique à action catalytique formant son propre support.

La masse poreuse est à base de dioxyde de titane. La taille moyenne des pores et des particules de la masse d'oxyde de titane est trop faible pour le traitement des gaz d'échappement dans une ligne d'échappement de véhicule automobile. Le procédé décrit dans ce document ne permet pas d'obtenir des pores ou particules d'oxyde de taille suffisante pour l'application à une ligne d'échappement de véhicule automobile.

L'invention a pour but de remédier à ces inconvénients et de proposer un convertisseur catalytique d'un prix de revient faible et facile à recycler.

A cet effet l'invention a pour objet un procédé de fabrication d'un convertisseur catalytique comprenant une masse de céramique à action catalytique formant son propre support, selon lequel :

- on élabore une poudre d'oxyde choisi parmi les oxydes de métaux de transition, de métaux alcalino-terreux et de lanthanides, en formant par précipitation un précurseur conditionnant la forme et la taille des particules d'oxyde, comprenant au moins un composé simple, à base d'un anion et d'un cation, ou mixte, à base d'un anion et de plusieurs cations différents, puis en traitant thermiquement le précurseur pour former la poudre d'oxyde comprenant ainsi au moins un oxyde simple ou mixte ;
- on forme une masse solide crue de céramique ayant des dimensions au moins égales sensiblement aux dimensions de la masse solide en agglomérant la poudre avec des additifs thermodégradables comprenant au moins un additif diluant en poudre ; et
- on forme la masse solide finale en frittant la masse solide crue par chauffage , les additifs étant thermodégradables à une température inférieure à la température de frittage de la masse solide crue, l'additif diluant créant par thermodégradation des pores dans la masse solide finale dont la taille est imposée par celle des particules de l'additif diluant ;

caractérisé en ce que ledit traitement thermique comporte deux étapes successives de chauffage, l'une dite à basse température, et l'autre dite à température élevée,

l'étape à basse température comprenant une première phase de montée en température rapide au cours de laquelle on chauffe le précurseur jusqu'à une température de 150°C, à une vitesse de 100 à 200°C/h, pour déshydrater le précurseur, et une seconde phase de montée en température lente, au cours de laquelle on chauffe le précurseur jusqu'à une température finale comprise entre 300 et 500°C, à une vitesse de 10°C/h, pour décomposer le précurseur en oxyde(s) en conservant la forme générale initiale des particules, la température finale étant maintenue pendant 0,5 à 2 heures,

l'étape à température élevée comprenant le chauffage du précurseur oxydé jusqu'à une température comprise entre 300 et 1000°C, soit instantanément, soit progressivement à une vitesse de 150°C/h, pour homogénéiser les oxydes par diffusions des ions.

Suivant d'autres caractéristiques de ce procédé :

- les particules d'oxyde ont des formes choisies parmi les formes aciculaires, sphéroïdales, en plaquettes ou en polyèdres réguliers ;

# EP 0 775 523 B1

- la taille moyenne des particules d'oxyde est comprise entre 0,1 et 10 μm et leur surface spécifique est comprise entre 0,1 et 300m$^2$/g, de préférence entre 0,5 et 50m$^2$/g ;

- le précurseur est formé en additionnant deux solutions distinctes contenant chacune au moins un réactif mélangé à un solvant, le réactif d'une première solution étant choisi parmi des sels de métaux de transition, de métaux alcalino-terreux et de lanthanides, notamment parmi les nitrates, les sulfates et les chlorures de ces éléments, le réactif de la seconde solution étant choisi parmi l'acide oxalique, l'acide citrique, l'oxalate d'ammonium, le carbonate d'ammonium, la soude, la potasse, l'ammoniaque et les bases organiques, le solvant de chaque solution comprenant de l'eau distillée, la concentration des réactifs dans chaque solution étant comprise entre 0,2 et 2 mole/l ;

- le solvant comporte de plus un alcool ou un polyol, le rapport volumique d'alcool ou polyol et d'eau distillée dans le solvant étant compris entre 0 et 60% pour la première solution et entre 0 et 100% pour la seconde solution ;

- on contrôle l'addition d'une solution à l'autre au moyen d'une pompe péristaltique dont le débit est réglé entre 1 et 1000 ml/mn ;

- on sépare le précurseur du milieu de précipitation, puis on lave et on sèche ce précurseur ;

- le précurseur est lavé plusieurs fois, de préférence 4 à 6 fois, au moyen d'un volume d'eau distillée d'environ 1 litre pour 100g de précurseur ;

- préalablement au séchage, on lave le précurseur à l'éthanol à 95% pour optimiser le séchage ;

- le précurseur est séché, à une température comprise entre 50 et 90°C, pendant 10 à 30 heures ;

- après séchage, les particules de précurseur sont calibrées pour atteindre une taille comprise entre 100 et 500 μm notamment par tamisage forcé ;

- l'étape à température élevée du traitement thermique est suivie d'un refroidissement du précurseur oxydé chauffé au cours duquel ce dernier est refroidi, soit rapidement, notamment par trempage, soit lentement à une vitesse comprise entre 50 et 200°C/h, de manière à conserver la forme générale initiale des particules ;

- pour agglomérer la poudre d'oxyde et les additifs thermodégradables, on additionne les additifs à la poudre de manière à former des granulés de taille supérieure à celles des particules d'oxyde, et on comprime les granulés obtenus ;

- les additifs thermodégradables comprennent un additif liant, destiné à agglomérer les particules de poudre d'oxyde en granulés, un additif lubrifiant destiné à réduire les frictions surfaciques des granulés, et un additif diluant, destiné à créer par thermodégradation des porosités dans la masse de céramique ;

- on mélange la poudre d'oxyde avec le diluant sous forme de poudre, par malaxage mécanique pendant 10 à 20 mn, de préférence pendant 12 à 15 mn ;

- pour additionner les additifs à la poudre, on ajoute progressivement au mélange précédent le liant sous forme pâteuse jusqu'à obtention d'une pâte à base d'oxyde, on granule cette pâte, et on ajoute le lubrifiant aux granulés ;

- la granulation est effectuée par tamisage forcé de la pâte dont la friabilité est éventuellement augmentée par séchage ;

- le tamisage forcé est effectué en deux passages successifs à travers deux tamis de finesse croissante, les granulés étant séchés entre les deux passages ;

- les deux tamis comprennent respectivement des ouvertures de calibrage de 2 mm et de 1 mm environ ;

- le diluant est choisi parmi les poudres de lactose, de cellulose et d'amidon, la taille moyenne des particules du diluant étant inférieure à 50 μm, de préférence comprise entre 30 et 40 μm, et le rapport massique du diluant par rapport à la poudre d'oxyde est compris entre 5 et 50%, de préférence entre 10 et 20% ;

- le liant est choisi parmi la PVP (polyvinylpyrrolidone), le saccharose et le HPMC (hydroxylpropylméthylcellulose), ce liant étant en solution dans un solvant avec une concentration d'environ 150 g/l pour la PVP, 500 g/l pour le saccharose et 20 g/l pour le HPMC, et le rapport massique du liant par rapport à la poudre d'oxyde est compris entre 1 et 7% ;

- le liant comprend du latex en solution ;

- le lubrifiant est choisi parmi l'huile de vaseline et la poudre d'acide stéarique, et le rapport massique du lubrifiant par rapport à la poudre d'oxyde est compris entre 5 et 25% pour l'huile de vaseline, et entre 0,1 et 1% pour l'acide stéarique ;

- lorsque le lubrifiant est de l'huile de vaseline, celle-ci est pulvérisée sur les granulés, et, lorsque le lubrifiant est la poudre d'acide stéarique, celle-ci est mélangée avec les granulés, par malaxage mécanique pendant 5 à 10 minutes ;

- la pression de compression des granulés est comprise entre 1500 et 2500 bars ;

- on fritte la masse de céramique par chauffage jusqu'à une température comprise entre 600 et 1500°C, cette température étant maintenue pendant 1 à 3 heures, puis on refroidit la masse de céramique ;

- les vitesses de montée en température et de refroidissement sont comprises entre 20 et 200°C/h.

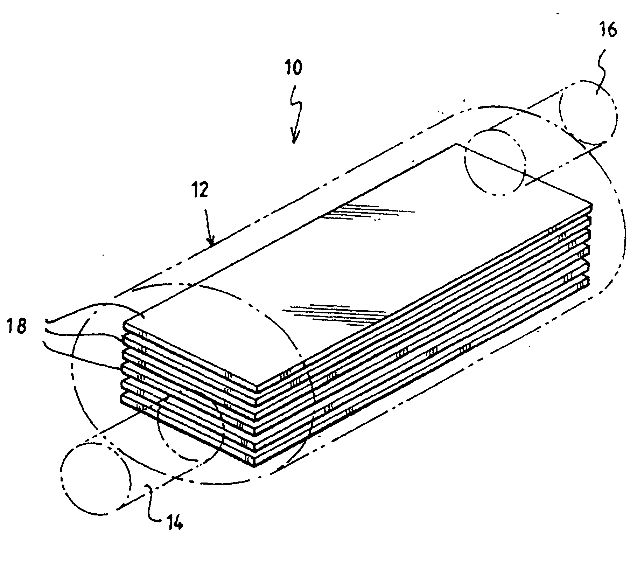

L'invention sera mieux comprise à la lecture de la description qui va suivre donnée uniquement à titre d'exemple et faite en se référant aux dessins annexés comportant une figure unique représentant schématiquement un élément de ligne d'échappement pour véhicule automobile.

On a représenté sur la figure unique un élément 10 de ligne d'échappement pour véhicule automobile, appelé pot.

Le pot 10, qui est représenté en trait mixte sur la figure, est délimité, de façon connue en soi, par une enveloppe métallique 12.

L'enveloppe 12 est munie de tubes 14,16 d'entrée et de sortie de gaz d'échappement raccordés à ces deux extrémités.

Des plaques 18 formant convertisseurs catalytiques sont disposées à l'intérieur du pot 10.

Les plaques 18 sont superposées et espacées entre elles, de manière à s'étendre sensiblement parallèlement à la direction générale de circulation des gaz dans le pot. Ainsi, les deux faces de chaque plaque 18 sont au contact des gaz d'échappement.

Les plaques 18 sont fixées de façon connue en soi à l'intérieur du pot 10.

Chaque plaque 18 comporte une masse poreuse de céramique à action catalytique formant sont propre support.

La masse de céramique comprend des particules agglomérées d'oxyde choisi parmi les oxydes de métaux de transition, de métaux alcalino-terreux et de lanthanides.

La surface spécifique de la masse de céramique est comprise entre 0,1 et 300m$^2$/g, de préférence entre 0,5 et 50m$^2$/g.

La porosité ouverte de la masse de céramique est comprise entre 5 et 80%, de préférence entre 30 et 50%.

La taille moyenne des pores et des particules de la masse de céramique est comprise entre 0,1 et 10 $\mu$m.

Cette taille des pores et particules est bien adaptée pour le traitement des gaz d'échappement d'un véhicule automobile.

De préférence, les particules d'oxyde ont une forme générale aciculaire. En variante, ces particules peuvent avoir des formes sphéroïdales, en plaquettes ou en polyèdres réguliers.

On décrira ci-dessous un procédé de fabrication d'une masse de céramique à action catalytique telle que décrite plus haut.

Ce procédé de fabrication comporte trois étapes principales.

Au cours de la première étape principale, on élabore une poudre d'oxyde choisi parmi les oxydes de métaux de transition, de métaux alcalino-terreux et de lanthanides, les particules de la poudre ayant une forme souhaitée.

Au cours de la seconde étape principale, on agglomère cette poudre avec des additifs thermodégradables de manière à former une masse solide crue de céramique ayant des dimensions au moins égales sensiblement aux dimensions de la masse de céramique formant son propre support que l'on veut obtenir.

Au cours de la troisième étape principale, on fritte au moins une portion de la masse de céramique par chauffage de manière à former une masse solide finale de céramique formant son propre support, les additifs étant thermodégradables à une température inférieure à la température de frittage de la masse de céramique.

Les deuxième et troisième étapes principales sont effectuées de manière à préserver la forme générale des particules de la poudre d'oxyde. Ainsi, la forme générale des particules constituant la masse de céramique frittée est imposée par la forme générale des particules de la poudre d'oxyde formée au cours de la première étape.

Les particules de la poudre d'oxyde ont de préférence des formes choisies parmi les formes aciculaires, sphéroïdales, en plaquettes ou en polyèdres réguliers. Ces formes de particules qui, grâce au procédé selon l'invention, sont conservées dans la masse de céramique, facilitent l'agglomération des particules et permettent d'obtenir une surface d'échange élevée de la masse de céramique.

On notera que les particules d'oxyde de forme aciculaire s'avèrent particulièrement résistantes et adaptées au frittage.

La taille moyenne des particules d'oxyde est comprise entre 0,1 et 10 $\mu$m et leur surface spécifique est comprise entre 0,1 et 300m$^2$/g, de préférence entre 0,5 et 50m$^2$/g.

On élabore la poudre d'oxyde de la façon suivante.

Initialement, on forme par précipitation un précurseur conditionnant la forme et la taille des particules d'oxyde, comportant au moins un composé simple, à base d'un anion et d'un cation, ou mixte, à base d'un anion et de plusieurs cations différents. Le précurseur peut comporter plusieurs composés simples et/ou mixtes.

De préférence, le précurseur est formé en additionnant deux solutions distinctes contenant chacune au moins un réactif mélangé à un solvant, ces solutions mettant en oeuvre des anions tels que des oxalates, des citrates, des carbonates, des hydroxycarbonates, des oxyhydroxydes ou des hydroxydes, et des cations dérivés d'éléments tels que Mn,Fe,Cr,Co,Ni,Cu,Zn,Y,La,Ca,Sr,etc..

Le réactif d'une première solution est choisi parmi des sels de métaux de transition, de métaux alcalino-terreux et de lanthanides, notamment parmi les nitrates, sulfates et chlorures de ces éléments.

Le réactif de la seconde solution est choisi parmi l'acide oxalique, l'acide citrique, l'oxalate d'ammonium, le carbonate d'ammonium, la soude, la potasse, l'ammoniaque et les bases organiques.

Le solvant de chaque solution comporte de l'eau distillée. La concentration des réactifs dans chaque solution est comprise entre 0,2 et 2 mole/l.

Eventuellement, le solvant comporte également un alcool ou polyol, le rapport volumique d'alcool ou polyol et d'eau distillée dans le solvant étant compris entre 0 et 60% pour la première solution, et 0 et 100% pour la seconde solution.

Chaque solution peut être légèrement acidifiée, notamment pour améliorer la dissolution des sels de départ.

Les solutions peuvent être préparées et additionnées à température ambiante. Dans certains cas, les solutions peuvent être chauffées à une température comprise entre 20 et 60°C, soit pour améliorer la dissolution des sels, soit pour augmenter la vitesse de précipitation lors de l'addition des deux solutions.

De préférence, on contrôle l'addition d'une solution à l'autre au moyen d'une pompe péristaltique dont le débit est réglé entre 1 et 1000 ml/mn.

En variante, l'addition des solutions peut être quasi instantanée en versant rapidement une solution dans l'autre.

Après addition des solutions, on sépare le précurseur du milieu de précipitation (eaux mères) par filtration, centrifugation, ou essorage, puis on lave ce précurseur plusieurs fois, de préférence quatre à six fois, au moyen d'un volume d'eau distillée d'environ un litre pour 100g de précurseur.

Le précurseur est ensuite séché, dans une étuve ou sur un bain de sable, à une température comprise entre 50 et 90°C, pendant 10 à 30 heures.

De préférence, préalablement au séchage du précurseur, on lave ce dernier à l'éthanol à 95% pour optimiser le séchage, et après séchage du précurseur, les particules de ce dernier sont calibrées pour atteindre une taille comprise entre 100 et 500 µm, notamment par tamisage forcé. Une taille inférieure est trop coûteuse à obtenir. Une taille supérieure conduirait à des hétérogénéités de température du traitement thermique ultérieur du précurseur.

Après formation du précurseur, on traite thermiquement ce dernier pour former la poudre d'oxyde, cette poudre comportant au moins un oxyde simple ou mixte.

Le traitement thermique du précurseur est effectué de manière à conserver la forme générale des particules du précurseur.

Le traitement thermique du précurseur comporte deux étapes successives de chauffage, l'une dite à basse température et l'autre dite à température élevée.

L'étape à basse température comprend deux phases, à savoir une première phase de montée en température rapide et une seconde phase de montée en température lente.

Au cours de la première phase, on chauffe le précurseur jusqu'à une température de 150°C, à une vitesse de 100 à 200°C/h, pour parfaire la déshydratation du précurseur.

Au cours de la seconde phase, on chauffe le précurseur jusqu'à une température finale comprise entre 300 et 500°C, à une vitesse de 10°C/h, pour décomposer le précurseur en oxydes en conservant la forme générale initiale des particules, la température finale étant maintenue pendant 0,5 à 2 h.

L'étape à température élevée du traitement thermique comprend le chauffage du précurseur oxydé jusqu'à une température comprise entre 300 et 1000°C, soit instantanément, par exemple par introduction dans un four chaud, soit progressivement, à une vitesse de 150°C/h, pour homogénéiser les oxydes par diffusion des ions.

Le traitement thermique du précurseur que l'on vient de décrire est effectué dans une atmosphère classique, notamment dans l'air, le chauffage du précurseur étant effectué dans des fours classiques.

De préférence, l'étape à température élevée du traitement thermique est suivie d'un refroidissement du précurseur oxydé et chauffé, soit très rapidement, notamment par trempage, soit lentement à une vitesse comprise entre 50 et 200°C/h, de manière à conserver la forme générale initiale des particules.

On décrira maintenant la seconde étape principale du procédé au cours de laquelle on agglomère la poudre d'oxyde avec des additifs thermodégradables.

Initialement on additionne les additifs à la poudre d'oxyde de manière à former des granulés de tailles supérieures à celles des particules d'oxyde. Puis, on forme une masse de céramique crue, par exemple en forme de plaque comme illustré sur la figure, en comprimant dans un moule les granulés obtenus, par pressage à froid, notamment à l'aide d'une presse classique à genouillère.

On utilise les additifs thermodégradables ci-dessous qui sont spécifiques à l'étape de compression par pressage à froid des granulés.

Ces additifs comprennent un additif liant, destiné à agglomérer les particules de poudre d'oxyde en granulés, un additif lubrifiant, destiné à réduire les frictions surfaciques des granulés, et un additif diluant, destiné à créer par thermodégradation des porosités dans la masse de céramique.

Le liant est choisi parmi la PVP (polyvinylpyrrolidone), le saccharose et le HPMC (hydroxylpropylméthylcellulose). Le liant est en solution dans un solvant classique, tel que de l'eau éventuellement additionnée d'alcool, avec une concentration d'environ 150 g/l pour la PVP, 500 g/l pour le saccharose et 20 g/l pour le HPMC.

Le rapport massique du liant par rapport à la poudre d'oxyde est compris entre 1 et 7%.

En variante, le liant peut comprendre du latex en solution dans du baltane.

Le lubrifiant est choisi parmi l'huile de vaseline, de préférence fluidifiée dans du white spirit, et la poudre d'acide stéarique.

Le rapport massique du lubrifiant par rapport à la poudre d'oxyde est compris entre 5 et 25% pour l'huile de vaseline et entre 0,1 et 1% pour l'acide stéarique.

Le diluant est choisi parmi les poudres de lactose, de cellulose et d'amidon. La taille moyenne des particules du diluant est inférieure à 50 μm, de préférence comprise entre 30 et 40 μm. La taille des particules du diluant impose la taille des pores de la masse de céramique.

Le rapport massique du diluant par rapport à la poudre d'oxyde est compris entre 5 et 50%, de préférence ente 10 et 20%.

On additionne les additifs thermodégradables à la poudre d'oxyde de la façon suivante.

Tout d'abord, on mélange la poudre d'oxyde avec le diluant sous forme de poudre, par malaxage mécanique pendant 10 à 20 mn, de préférence pendant 12 à 15 mn, pour bien homogénéiser le mélange.

Puis on ajoute progressivement à ce mélange le liant sous forme pâteuse jusqu'à obtention d'une pâte à base d'oxyde.

Ensuite on granule cette pâte. Cette granulation est effectuée par tamisage forcé de la pâte dont la friabilité est éventuellement augmentée par séchage, de préférence à une température comprise entre 60 et 90°C pendant 0,5 à 2h.

Le tamisage forcé peut être avantageusement effectué en deux passages successifs à travers deux tamis de finesse croissante, le premier tamis comportant des ouvertures de calibrage de 2mm environ et le second tamis comportant des ouvertures de calibrage de 1 mm environ.

Les granulés sont séchés entre les deux passages, par chauffage à une température comprise entre 60 et 90°C pendant 0,5 à 2 h, ces granulés étant par exemple étalés sur une plaque.

Finalement, on ajoute le lubrifiant aux granulés.

Lorsque le lubrifiant est l'huile de vaseline, celle-ci est pulvérisée, par exemple au moyen d'un aérosol, sur les granulés.

Lorsque le lubrifiant est la poudre d'acide stéarique, celle-ci est mélangée avec les granulés par malaxage mécanique pendant 5 à 10 mn. Une durée de mélange plus courte ne permettrait pas une bonne homogénéisation des granulés et de la poudre de lubrifiant. Une durée de mélange plus importante entraînerait une dégradation des granulés.

Les granulés lubrifiés sont particulièrement bien adaptés à l'étape de compression par pressage à froid. En effet, les granulés millimétriques, de taille supérieure aux particules de la poudre d'oxyde, s'écoulent plus facilement que cette dernière dans une moule de presse classique. Par ailleurs, le lubrifiant réduit les frictions entre granulés et moule de la presse.

Le moulage de la masse de céramique crue par pressage à froid des granulés est effectué à une pression comprise entre 1500 et 2500 bars. Si cette pression est plus faible, la tenue mécanique de la masse de céramique est insuffisante. Si cette pression est plus élevée, la masse de céramique sera susceptible de se dégrader lors du frittage de celle-ci.

On décrira maintenant la troisième étape principale du procédé de fabrication selon l'invention.

Au cours de cette étape, on fritte la masse de céramique par chauffage, dans un four classique, à une température comprise entre 600 et 1500°C, cette température étant maintenue pendant 1 à 3 h.

Les oxydes à base de cobalt, de fer ou de manganèse, sont chauffés de préférence à une température comprise entre 600 et 900°C. Les oxydes à base de chrome sont chauffés de préférence à une température comprise entre 1000 et 1500°C.

Ce chauffage permet, d'une part, la dégradation des additifs, notamment du diluant, et la formation de pores, et d'autre part, la solidification de la masse de céramique.

Après chauffage, la masse de céramique est refroidie. Elle est alors utilisable comme convertisseur catalytique.

Les vitesses de montée en température et de refroidissement sont comprises de préférence entre 20 et 200°C/ h.

On donnera ci-dessous des exemples d'élaboration de poudres d'oxyde, de granulation de ces poudres et de frittage des masses de céramique obtenues par compression des granulés.

## 1. Exemples d'élaboration de poudres d'oxyde

### Exemple EP1

On prépare une solution S1 en dissolvant 1 mole/l de chlorure de Fe II, de chlorure de cobalt ou un mélange des deux selon un rapport Fe/(Fe+Co)=(3-x)/3, dans un solvant constitué de 60% volumique de $H_2O$ et 40% volumique d'éthylène-glycol, et une solution S2 en dissolvant 0,54 mole/l d'acide oxalique dans de l'éthanol.

S1 est ajouté à S2 en employant une pompe péristaltique, avec un débit de 20 ml/mn (cc/mn) et avec un rapport volumique S1/S2 = 1/2. Le précipité est séparé des eaux mères par centrifugation puis lavé 4 à 5 fois à l'eau distillée.

Après séchage, sur bain de sable ou en étuve à 60°C environ, le produit est broyé manuellement puis calibré par passage forcé dans un tamis muni d'ouvertures de 250 μm.

Le précurseur obtenu est traité à une température de palier comprise entre 475 et 600°C, à savoir 475°C pour x=0, 550°C pour x=1 et 600°C pour x = 3, pendant 0,5 mn à 1 heure avec une montée en température de 10°C/h jusqu'à une température comprise entre 350°C (pour x=0) et 400°C (pour x=1 à 3), puis de 150°C/h jusqu'à la température de palier. Le précurseur est ramené à la température ambiante avec une vitesse de refroidissement de 100°C h.

La poudre ainsi préparée se présente sous forme de particules aciculaires de longueur L = 1 μm et de largeur l = 0,2 à 0,4 μm. La surface spécifique est d'environ 30m²/g. La phase cristallographique obtenue est $(Fe_{3-x}Co_xO_4)_x$, $(Fe_2O_3)_{1-z}$, avec Z = pour x=0, et z=1 pour tous les autres cas.

Une partie des ions Fe et Co peut être substituée par des ions M avec M=Cu,Cr,Mn ou Ni, de telle sorte que le rapport M/(Co+Fe) soit compris entre 0 et 1,5.

Préférentiellement, les quantités respectives des différents sels de départ seront choisies pour conduire aux compositions suivantes : $Co_3O_4$/$Co_{2.5}Fe_{0.5}O_4$/$Co_{2.5}Cu_{0.5}O_4$/$Co_{1.5}Mn_{1.5}O_4$/$Co_2CrO_4$/$Cr_2CuO_4$.

### Exemple EP2

Même procédé que dans l'exemple EP1 avec, dans ce cas, une vitesse d'addition de S1 dans S2 de 50 ml/mn (cc/mn). Le précurseur obtenu est traité à 600°C pendant 1 heure avec une montée en température de 10°C/h jusqu'à 400°C, puis de 150°C/h jusqu'à la température de palier. Le précurseur est ramené à température ambiante avec une vitesse de refroidissement de 100°C/h. La poudre ainsi préparée se présente sous forme de particules aciculaires de longueur L = 0,2 μm et de largeur l = 0,05 μm. Les phases cristallographiques obtenues sont les mêmes que pour l'exemple EP1.

### Exemple EP3

On prépare une solution S1 en dissolvant 0,33 mole/l de chlorure de Fe II et 0,66 mole/l de chlorure de Fe III dans de l'eau. La solution S2 est une solution aqueuse à 30% d'ammoniaque ou de triéthylamine. S1 est versée rapidement dans S2, avec un rapport volumique S1/S2 = 3/4. Lorsque tout le produit est précipité, il est séparé des eaux mères par centrifugation puis lavé 4 à 5 fois à l'eau distillée. Après séchage sur bain de sable ou en étuve, le produit est broyé manuellement puis calibré avec un tamis muni d'ouvertures de 250 μm.

Le précurseur obtenu est traité à une température de palier comprise entre 500°C et 550°C pendant 1,5 heure avec une montée en température de 150°C/h jusqu'à la température de palier. Le précurseur est ramené à température ambiante avec une vitesse de refroidissement de 100°C/h.

La poudre ainsi préparée se présente sous forme de particules sphéroïdales de diamètre D = 0,05 μm. La surface spécifique est d'environ 25m²/g. La phase cristallographique obtenue est α-$Fe_2O_3$.

Tout ou partie des ions du fer peut être substituée par des ions du cobalt, de telle sorte que, pour le rapport Fe/(Fe+Co)=(3-x)/3, x varie de 0 à 3. Dans ce cas, les phases cristallographiques obtenues ont pour formule générale celle précisée plus haut dans cet exemple. De même une partie des ions Fe et Co peut être substituée par des ions M, avec M=Cr,Mn ou Ni, de telle sorte que le rapport M/(Co+Fe) soit compris entre 0 et 1,5. Les phases cristallographiques sont dans ce cas les mêmes que celles de l'exemple EP1.

### Exemple EP4

Même procédé que pour l'exemple EP1 avec dans ce cas S1:0,2 mole/l de réactif dans une solution 100% aqueuse ; S2:0,2 mole/l de réactif dans une solution 100% aqueuse ; S1/S2:1/2,7 ; vitesse d'addition de S1 dans S2: 25cc/mn.

La poudre ainsi préparée se présente sous forme des particules aciculaires de longueur L = 20 μm et de

largeur l = 5 à 10 µm, et la surface spécifique est de 10m$^2$/g.

**Exemple EP5**

Même procédé que pour l'exemple EP4, en versant directement S1 dans une solution S2 comprenant 0,54 mol/l d'oxalate d'ammonium dissout dans de l'eau.

La poudre ainsi préparée se présente sous forme de particules polyédriques de longueur L = 4 µm. La surface spécifique est de 15m$^2$/g.

**Exemple EP6**

Même procédé que pour l'exemple EP5, en lavant, dans ce cas, 8 à 10 fois le produit après séparation d'avec les eaux mères et en le faisant sécher sur bain de sable en l'étalant en très fine couche.

La poudre ainsi préparée se présente sous forme des particules sphériques de diamètre D = 20 µm.

**Exemple EP7**

On prépare une solution S1 en dissolvant 0,5 mole/l de nitrate de chrome et 1,5 mole/l d'oxalate d'ammonium dans de l'eau. La solution est agitée et chauffée à 60°C jusqu'à dissolution totale des sels, puis refroidie à température ambiante. On ajoute S1 directement à une solution S2 composée d'un mélange de 50% vol. d'éthylène-glycol et de 50% vol. d'éthanol. Le rapport S1/S2 est égal à 1/10.

Après les mêmes opérations de lavage et de séchage que dans l'exemple EP1, on obtient des plaquettes de 15 µm de long et de 1 µm d'épaisseur.

**Exemple EP8**

Même procédé que pour l'exemple EP7 exceptée la nature des solvants de S2.

Si le solvant de S2 comprend 15% vol. d'éthylèneglycol et 85% vol. d'éthanol, on obtient des polyèdres de 30 µm de long.

Si le solvant de S2 comprend 50% vol. de méthanol et 50% vol. d'acétone, on obtient des aiguilles de 10 µm de long.

Si le solvant de S2 comprend 85% vol. d'éthylèneglycol et 15% vol. d'acétone, on obtient des aiguilles de 5 µm de long.

**Exemple EP9**

On prépare une solution S1 en dissolvant 0,3 mole/l de nitrate de lanthane en milieu aqueux, et une solution S2 en dissolvant 0,7 mole/l de citrate d'ammonium dans une solution aqueuse à 4% d'ammoniaque. S2 est ajoutée directement à S1 selon un rapport volumique S1/S2= 2/1. Lorsque tout le produit est précipité, il est séparé des eaux mères par centrifugation puis lavé 4 à 5 fois à l'eau distillée.

Après séchage sur bain de sable ou en étuve à 60°C environ, le produit est broyé manuellement puis calibré avec un tamis muni d'ouvertures de 250 µm.

On obtient du citrate de lanthane.

Parallèlement, on prépare une solution S'1 en dissolvant 0,5 mole/l d'acide citrique en milieu aqueux, à 70°C. On ajoute par petite quantité une solution S'2 comprenant 0,2 mole/l de carbonate basique de cobalt. Au bout de 5 heures environ tout le produit est précipité, et il est séparé des eaux mères par centrifugation puis lavé 4 à 5 fois à l'eau distillée.

Après séchage sur bain de sable ou en étuve à 60°C environ, le produit est broyé manuellement puis calibré avec un tamis muni d'ouvertures de 250 µm.

On obtient du citrate de cobalt.

On prépare ensuite deux solutions acqueuses S"1 et S"2 à 10% d'ammoniaque dans lesquelles on dissout respectivement le citrate de cobalt et le citrate de lanthane à raison de 0,05 mole/l. Puis, rapidement après, on mélange les deux solutions S"1 et S"2.

Lorsque tout le produit est précipité, il est séparé de la solution aqueuse par centrifugation puis lavé 4 à 5 fois à l'eau distillée.

Après séchage sur bain de sable ou en étuve à 60°C environ, le produit est broyé manuellement puis calibré avec un tamis muni d'ouvertures de 250 µm.

Le précurseur obtenu est traité à une température de palier de 850°C pendant 4 heures avec une montée en température de 150°C/h jusqu'à la température de palier. Le précurseur est ramené à température ambiante avec une vitesse de refroidissement de 100°C/h.

La poudre ainsi préparée se présente sous forme de particules polyédriques ayant une surface spécifique de $3,6 m^2/g$. La phase cristallographique obtenue est $LaCoO_3$. Eventuellement, le traitement thermique des deux poudres initiales conduit respectivement à l'obtention de $La_2O_3$ et de $Co_3O_4$.

## 2. Exemples de granulation et de compression des granulés

### Exemple EG1

100 grammes de poudre d'oxyde sont ajoutés à 10 à 50 g de lactose, amidon, ou cellulose (diluant). le mélange obtenu est malaxé dans un mélangeur mécanique, pendant 15 mn.

On ajoute ensuite 6 $cm^3$ d'une solution 50% vol. $H_2O$-50% vol. éthanol contenant 20 g/l de HPMC (hydroxylpropylméthylcellulose) (liant). L'addition se fait par petites quantités de liant dans le mélange initial et en mélangeant manuellement le produit jusqu'à obtention d'une pâte homogène. Cette pâte est séchée à 90°C pendant 1 heure.

Ensuite, la pâte est calibrée dans un tamis muni d'ouvertures de 2mm, puis est à nouveau séchée, dans les mêmes conditions que précédemment, en prenant soin d'étaler les granulés sur une plaque. On calibre à nouveau les granulés obtenus dans un tamis muni d'ouvertures de 1mm.

Enfin, on pulvérise de l'huile de vaseline (lubrifiant) sur les granulés à l'aide d'un aérosol. La quantité de lubrifiant pulvérisée correspond à environ 20% de la masse totale des granulés.

### Exemple EG2

Même procédé que pour l'exemple EG1 en utilisant, dans ce cas, comme liant, soit 20 $cm^3$ de PVP (polyvinylpyrrolidone) dissoute dans de l'eau à raison de 150 g/l, soit 8 $cm^3$ de saccharose dissout dans de l'eau à raison de 500g/l.

### Exemple EG3

Même procédé que pour les exemples EG1 ou EG2 en utilisant, dans ce cas, comme lubrifiant de l'acide stéarique en poudre. Ce dernier est ajouté aux granulés et on malaxe le tout dans un mélangeur mécanique, pendant 10 minutes.

Dans ces trois exemples, on utilisera de préférence un diluant comprenant 10 à 20g de lactose, un liant comprenant de la PVP et un lubrifiant comprenant de l'acide stéarique.

Les granulés obtenus suivant les exemples EG1 à EG3 sont comprimés à l'aide d'une presse classique avec une pression d'environ 1500 bars.

## 3. Exemples de frittage des masses de céramiques

Les masses de céramiques obtenues par compression des granulés élaborés suivant les exemples EG1 à EG3 sont chauffées à une température comprise entre 500 et 900°C, avec une montée en température de 150°C/h, un maintien de cette température pendant 1 à 5 heures, et une vitesse de refroidissement variant de 15 à 200°C/h.

Les deux tableaux 1 et 2 ci-dessous précisent les caractéristiques des masses de céramiques obtenues dans des exemples précédents.

Les performances catalytiques des masses de céramiques sont testées avec les trois compositions de gaz suivantes.

a/ 2% éthane + 8% oxygène + 90% azote (gaz porteur)
b/ 4% CO + 6% oxygène + 90% azote
c/ 2% NO + 2% CO + 96% azote.

Les deux premières compositions a/ et b/ permettent de mesurer l'activité des catalyseurs pour des réactions d'oxydation (oxydation de l'éthane par l'oxygène, et du CO par l'oxygène). La dernière composition c/ permet de mesurer l'activité des catalyseurs pour une réaction de réduction (NO par CO).

Pour les compositions a/ et b/ les taux de conversion TC sont calculés de la façon suivante :

TC% (taux de conversion en %) = [% éthane initial (ou CO initial) - % éthane (ou CO) après passage sur le catalyseur]/[% éthane initial (ou CO initial)].

Pour la composition c/, du fait de la formation de divers oxydes d'azote au contact de la masse de céramique, on évalue la conversion de l'ensemble des espèces azotées, dites NOx.

L'activité des masses de céramiques est évaluée selon les étapes suivantes :

- analyse de la composition initiale a/ et envoi de cette composition sur une masse de céramique avec un débit de 20 cm$^3$/mn ;
- mesure de la conversion de l'éthane à 300, 400 et 500°C ;
- analyse de la composition initiale b/ et envoi de cette composition sur une masse de céramique avec un débit de 20 cm$^3$/mn ;
- mesure de la conversion du CO à 300, 400 et 500°C ;
- analyse de la composition initiale c/ et envoi de cette composition sur une masse de céramique avec un débit de 20 cm$^3$/mn ;
- mesure de la conversion des NOx à 300, 400 et 500°C.

Tableau 1

| Exemples de préparation | Oxyde | Température de frittage | Surface spécifique (m$^2$/g) | % pores (1) | Diamètre moyen des pores (µm) (2) | Résistance mécanique (daN)(3) |
|---|---|---|---|---|---|---|
| EP1 | $Fe_2O_3$ | 600 | 3 | 50 | 0,12 | 4,5 |
| EP1 | $Fe_2O_3$ | 800 | 2 | 44 | 0,25 | 11 |
| EP5 | $Co_3O_4$ | 600 | 5 | 59 | 0,18 | 4,5 |
| EP5 | $Co_3O_4$ | 800 | 1,2 | 47 | 0,55 | 9,5 |
| EP1 | $Co_3O_4$ | 850 | 0,6 | 28 | 3 et 0,4 | 28 |
| EP3 | $Co_{2,7}Cu_{0,3}O_4$ | 600 | 6 | 64 | 0,4 | 4,5 |
| EP9 | $LaCoO_3$ | 1200 | 0,5 | 25 | 2 | 25 |
| EP3 | $Cr_{21}Cu_{0,9}O_4$ | 800 | 2 | 30 | 0,6 | 6 |
| EP8 | $Cr_2O_3$ | 600 | 5 | 40 | 0,5 | 5 |
| EP1 | $CrCo_{1,1}Ni_{0,4}Cu_{0,5}O_4$ | 600 | 6 | 50 | 0,6 | 5 |

(1) : % de porosité ouverte, mesuré par porosimétrie à mercure ;

(2) : dimension moyenne de la ou des familles de pores ;

(3) : résistance mécanique à la rupture en compression, mesurée par vis dynamométrique.

Tableau 2

| Exemples de préparation | Oxyde | Température de frittage | $C_2H_6$ 300 (4) | $C_2H_6$ 400 (4) | $C_2H_6$ 500 (4) | CO 300 (4) | NOx 300 (4) | NOx 400 (4) | NOx 500 (4) |
|---|---|---|---|---|---|---|---|---|---|
| EP1 | $Fe_2O_3$ | 600 | 3 | 36 | 94 | 68 | 60 | 100 | 100 |
| EP1 | $Fe_2O_3$ | 800 | 0 | 24 | 84 | 78 | 67 | 100 | 100 |
| EP5 | $Co_3O_4$ | 600 | 82 | 100 | 100 | 100 | 85 | 100 | 100 |
| EP5 | $Co_3O_4$ | 800 | 29 | 94 | 100 | 100 | 72 | 100 | 100 |
| EP1 | $Co_3O_4$ | 850 | 16 | 75 | 100 | 100 | 80 | 100 | 100 |
| EP3 | $Co_{2,7}Cu_{0,3}O_4$ | 600 | 12 | 81 | 100 | 100 | 89 | 95 | 100 |

(4) : taux de conversion, en %, de l'éthane, du CO et des NOx à 300,400 et 500°C.

Tableau 2   (suite)

| Exemples de préparation | Oxyde | Température de frittage | $C_2H_6$ 300 (4) | $C_2H_6$ 400 (4) | $C_2H_6$ 500 (4) | CO 300 (4) | NOx 300 (4) | NOx 400 (4) | NOx 500 (4) |
|---|---|---|---|---|---|---|---|---|---|
| EP9 | $LaCoO_3$ | 1200 | 4 | 39 | 85 | 100 | 33 | 86 | 88 |
| EP3 | $Cr_{21}Cu_{0,9}O_4$ | 800 | 8 | 78 | 100 | - | 100 | 100 | - |
| EP8 | $Cr_2O_3$ | 600 | 15 | 71 | 100 | 73 | 68 | 95 | 100 |
| EP1 | $CrCo_{1,1}Ni_{0,4}Cu_{0,5}O_4$ | 600 | 16 | 69 | 91 | 99 | 88 | 89 | 90 |

(4) : taux de conversion, en %, de l'éthane, du CO et des NOx à 300,400 et 500°C.

L'invention ne se limite pas aux exemples décrits ci-dessus.

En particulier, les masses de céramiques agencées dans un élément de ligne d'échappement pour véhicule automobile peuvent avoir des formes variées, autres que la forme de plaque illustrée sur la figure.

L'agglomération de la poudre d'oxyde avec les additifs thermodégradables peut être effectuée autrement que par pressage à froid, notamment par des procédés classiques de coulage en bande, d'extrusion ou de moulage.

Le convertisseur catalytique selon l'invention est plus simple à réaliser qu'un convertisseur catalytique classique. En effet, il n'est pas nécessaire de déposer un revêtement à action catalytique sur un support. On évite ainsi les problèmes d'adhérence entre ce revêtement actif et le support.

Un convertisseur catalytique selon l'invention présente une meilleure résistance aux poisons et à l'érosion des gaz par rapport aux catalyseurs classiques comportant une faible quantité de matériaux catalytiques.

Le convertisseur catalytique selon l'invention est économique car les matériaux qui le constituent sont cinq à dix fois moins chers que les métaux précieux utilisés dans les convertisseurs catalytiques classiques.

Le convertisseur catalytique selon l'invention est facile à recycler car il ne requiert aucun traitement pour séparer le revêtement actif de son support.

**Revendications**

1.   Procédé de fabrication d'un convertisseur catalytique comprenant une masse de céramique (18) à action catalytique formant son propre support appelée masse solide finale, selon lequel :

-   on élabore une poudre d'oxyde choisi parmi les oxydes de métaux de transition, de métaux alcalino-terreux et de lanthanides, en formant par précipitation un précurseur conditionnant la forme et la taille des particules d'oxyde, comprenant au moins un composé simple, à base d'un anion et d'un cation, ou mixte, à base d'un anion et de plusieurs cations différents, puis en traitant thermiquement le précurseur pour former la poudre d'oxyde comprenant ainsi au moins un oxyde simple ou mixte ;
-   on forme une masse solide crue de céramique ayant des dimensions au moins égales sensiblement aux dimensions de la masse solide en agglomérant la poudre avec des additifs thermodégradables comprenant au moins un additif diluant en poudre ; et
-   on forme la masse solide finale en frittant la masse solide crue par chauffage , les additifs étant thermodégradables à une température inférieure à la température de frittage de la masse solide crue, l'additif diluant créant par thermodégradation des pores dans la masse solide finale dont la taille est imposée par celle des particules de l'additif diluant ;

   **caractérisé en ce que** ledit traitement thermique comporte deux étapes successives de chauffage, l'une dite à basse température, et l'autre dite à température élevée,

   l'étape à basse température comprenant une première phase de montée en température rapide au cours de laquelle on chauffe le précurseur jusqu'à une température de 150°C, à une vitesse de 100 à 200°C/h, pour déshydrater le précurseur, et une seconde phase de montée en température lente, au cours de laquelle on chauffe le précurseur jusqu'à une température finale comprise entre 300 et 500°C, à une vitesse de 10°C/h, pour décomposer le précurseur en oxyde(s) en conservant la forme générale initiale des particules, la température finale étant maintenue pendant 0,5 à 2 heures,

   l'étape à température élevée comprenant le chauffage du précurseur oxydé jusqu'à une température comprise entre 300 et 1000°C, soit instantanément, soit progressivement à une vitesse de 150°C/h, pour homogénéiser les oxydes par diffusions des ions.

EP 0 775 523 B1

**2.** Procédé selon la revendication 1, **caractérisé en ce que** les particules d'oxyde ont des formes choisies parmi les formes aciculaires, sphéroïdales, en plaquettes ou en polyèdres réguliers.

**3.** Procédé selon la revendication 2, **caractérisé en ce que** la taille moyenne des particules d'oxyde est comprise entre 0,1 et 10 $\mu$m et leur surface spécifique est comprise entre 0,1 et 300m$^2$/g, de préférence entre 0,5 et 50m$^2$/g.

**4.** Procédé selon l'une quelconque des revendications 1 à 3, **caractérisé en ce que** le précurseur est formé en additionnant deux solutions distinctes contenant chacune au moins un réactif mélangé à un solvant, le réactif d'une première solution étant choisi parmi des sels de métaux de transition, de métaux alcalino-terreux et de lanthanides, notamment parmi les nitrates, les sulfates et les chlorures de ces éléments, le réactif de la seconde solution étant choisi parmi l'acide oxalique, l'acide citrique, l'oxalate d'ammonium, le carbonate d'ammonium, la soude, la potasse, l'ammoniaque et les bases organiques, le solvant de chaque solution comprenant de l'eau distillée, la concentration des réactifs dans chaque solution étant comprise entre 0,2 et 2 mole/l.

**5.** Procédé selon la revendication 4, **caractérisé en ce que** le solvant comporte de plus un alcool ou un polyol, le rapport volumique d'alcool ou polyol et d'eau distillée dans le solvant étant compris entre 0 et 60% pour la première solution et entre 0 et 100% pour la seconde solution.

**6.** Procédé selon les revendications 4 ou 5, **caractérisé en ce que** l'on contrôle l'addition d'une solution à l'autre au moyen d'une pompe péristaltique dont le débit est réglé entre 1 et 1000 ml/mn.

**7.** Procédé selon l'une quelconque des revendications 1 à 6, **caractérisé en ce que** l'on sépare le précurseur du milieu de précipitation, puis on lave et on sèche ce précurseur.

**8.** Procédé selon la revendication 7, **caractérisé en ce que** le précurseur est lavé plusieurs fois, de préférence 4 à 6 fois, au moyen d'un volume d'eau distillée d'environ 1 litre pour 100g de précurseur.

**9.** Procédé selon les revendications 7 ou 8, **caractérisé en ce que**, préalablement au séchage, on lave le précurseur à l'éthanol à 95% pour optimiser le séchage.

**10.** Procédé selon l'une quelconque des revendications 7 à 9, **caractérisé en ce que** le précurseur est séché, à une température comprise entre 50 et 90°C, pendant 10 à 30 heures.

**11.** Procédé selon l'une quelconque des revendications 7 à 10, **caractérisé en ce qu'**après séchage, les particules de précurseur sont calibrées pour atteindre une taille comprise entre 100 et 500 $\mu$m, notamment par tamisage forcé.

**12.** Procédé selon l'une quelconque des revendications 1 à 11, **caractérisé en ce que** l'étape à température élevée du traitement thermique est suivie d'un refroidissement du précurseur oxydé chauffé au cours duquel ce dernier est refroidi, soit rapidement, notamment par trempage, soit lentement à une vitesse comprise entre 50 et 200°C/h, de manière à conserver la forme générale initiale des particules.

**13.** Procédé selon l'une quelconque des revendications 1 à 12, **caractérisé en ce que** pour agglomérer la poudre d'oxyde et les additifs thermodégradables :

- on forme des granulés de taille supérieure à celle des particules d'oxyde en additionnant les additifs à la poudre d'oxyde; et
- on comprime les granulés obtenus.

**14.** Procédé selon la revendication 13, **caractérisé en ce que** les additifs thermodégradables comprennent, en plus de l'additif diluant, un additif liant, destiné à agglomérer les particules de poudre d'oxyde en granulés et un additif lubrifiant destiné à réduire les frictions surfaciques des granulés.

**15.** Procédé selon la revendication 14, **caractérisé en ce que** pour additionner les additifs à la poudre:

- on mélange la poudre d'oxyde avec le diluant sous forme de poudre, par malaxage mécanique pendant 10 à 20 mn, de préférence pendant 12 à 15 mn ;
- on ajoute progressivement au mélange précédent le liant sous forme pâteuse jusqu'à obtention d'une pâte à base d'oxyde ;

- on granule cette pâte ; et
- on ajoute le lubrifiant aux granulés.

16. Procédé selon la revendication 15, **caractérisé en ce que** la granulation est effectuée par tamisage forcé de la pâte dont la friabilité est éventuellement augmentée par séchage.

17. Procédé selon la revendication 16, **caractérisé en ce que** le tamisage forcé est effectué en deux passages successifs à travers deux tamis de finesse croissante, les granulés étant séchés entre les deux passages.

18. Procédé selon la revendication 17, **caractérisé en ce que** les deux tamis comprennent respectivement des ouvertures de calibrage de 2 mm et de 1 mm environ.

19. Procédé selon l'une quelconque des revendications 1 à 18, **caractérisé en ce que** le diluant est choisi parmi les poudres de lactose, de cellulose et d'amidon, la taille moyenne des particules du diluant étant inférieure à 50 μm, de préférence comprise entre 30 et 40 μm, et **en ce que** le rapport massique du diluant par rapport à la poudre d'oxyde est compris entre 5 et 50%, de préférence entre 10 et 20%.

20. Procédé selon l'une quelconque des revendications 14 à 19, **caractérisé en ce que** le liant est choisi parmi la PVP (poplyvinylpyrrolidone), le saccharose et le HPMC (hydroxylpropylméthylcellulose), ce liant étant en solution dans un solvant avec une concentration d'environ 150 g/l pour la PVP, 500 g/l pour le saccharose et 20 g/l pour le HPMC, et **en ce que** le rapport massique du liant par rapport à la poudre d'oxyde est compris entre 1 et 7%.

21. Procédé selon l'une quelconque des revendications 14 à 20, **caractérisé en ce que** le liant comprend du latex en solution.

22. Procédé selon l'une quelconque des revendications 14 à 21, **caractérisé en ce que** le lubrifiant est choisi parmi l'huile de vaseline et la poudre d'acide stéarique, et **en ce que** le rapport massique du lubrifiant par rapport à la poudre d'oxyde est compris entre 5 et 25% pour l'huile de vaseline, et entre 0,1 et 1% pour l'acide stéarique.

23. Procédé selon les revendications 15 et 22 prises ensemble, **caractérisé en ce que**, lorsque le lubrifiant est de l'huile de vaseline, celle-ci est pulvérisée sur les granulés, et **en ce que**, lorsque le lubrifiant est la poudre d'acide stéarique, celle-ci est mélangée avec les granulés, par malaxage mécanique pendant 5 à 10 minutes.

24. Procédé selon l'une quelconque des revendications 13 à 23, **caractérisé en ce que** la pression de compression des granulés est comprise entre 1500 et 2500 bars.

25. Procédé selon l'une quelconque des revendications 1 à 24, **caractérisé en ce que** l'on fritte la masse de céramique par chauffage jusqu'à une température comprise entre 600 et 1500°C, cette température étant maintenue pendant 1 à 3 heures, puis on refroidit la masse de céramique.

26. Procédé selon la revendication 25, **caractérisé en ce que** les vitesses de montée en température et de refroidissement sont comprises entre 20 et 200°C/h.

**Patentansprüche**

1. Verfahren zur Herstellung eines katalytischen Wandlers mit einer katalytisch wirksamen, selbsttragenden Keramikmasse (18), die als feste Endmasse bezeichnet wird, mit folgenden Schritten:

- ein aus den Oxiden von Übergangsmetallen, ErdalkaliMetallen und Lanthaniden ausgewähltes Oxidpulver wird erstellt, indem durch Ausfällung ein Vorläuferstoff gebildet wird, der die Form und Größe der Oxidteilchen beeinflusst und zumindest eine einfache, auf einem Anion und einem Kation beruhende Zusammensetzung oder eine gemischte, auf einem Anion und mehreren verschiedenen Kationen beruhende Zusammensetzung umfasst, und der Vorläuferstoff dann thermisch behandelt wird, um das Oxidpulver zu bilden, das somit zumindest ein einfaches oder gemischtes Oxid aufweist;
- eine feste Keramik-Rohmasse, deren Abmessungen im wesentlichen wenigstens gleich groß sind wie die Abmessungen der festen Masse, wird gebildet, indem das Pulver mit thermisch abbaubaren Additiven, die wenigstens ein pulverförmiges Streckungsmittel umfassen, zusammengeballt wird; und

- die feste Endmasse wird gebildet, indem die feste Rohmasse thermisch gesintert wird, wobei die Additive bei einer unterhalb der Sintertemperatur der festen Rohmasse liegenden Temperatur thermisch abbaubar sind und das Streckungsmittel durch thermischen Abbau in der festen Endmasse Poren erzeugt, deren Größe durch die Größe der Teilchen des Streckungsmittels festgelegt wird;

**dadurch gekennzeichnet, dass** die thermische Behandlung zwei aufeinanderfolgende Heizschritte umfasst, von denen der eine als Niedertemperaturschritt und der andere als Hochtemperaturschritt bezeichnet wird, wobei der Niedertemperaturschritt eine erste Phase schnellen Temperaturanstiegs, in deren Verlauf der Vorläuferstoff zu dessen Entwässerung mit einer Geschwindigkeit von 100 bis 200°C/h auf eine Temperatur von 150°C erhitzt wird; und eine zweite Phase langsamen Temperaturanstiegs umfasst, in deren Verlauf der Vorläuferstoff mit einer Geschwindigkeit von 10°C/h auf eine Endtemperatur zwischen 300 und 500°C erhitzt wird, um den Vorläuferstoff in Oxid(e) zu zerlegen und dabei die allgemeine Anfangsform der Teilchen zu bewahren, wobei die Endtemperatur 0,5 bis 2 Stunden lang beibehalten wird, wobei der Hochtemperaturschritt das Erhitzen des oxidierten Vorläuferstoffs auf eine zwischen 300 und 1000°C gelegene Temperatur umfasst, sei es augenblicklich oder fortschreitend mit einer Geschwindigkeit von 150°C/h, um die Oxide durch Diffusion der Ionen zu homogenisieren.

2.  Verfahren nach Anspruch 1, **dadurch gekennzeichnet, dass** die Oxidteilchen Formen aufweisen, die aus nadelförmigen, kugelförmigen, plättchenförmigen oder regelmäßig polyedrischen Formen ausgewählt sind.

3.  Verfahren nach Anspruch 2, **dadurch gekennzeichnet, dass** die mittlere Größe der Oxidteilchen zwischen 0,1 und 10 Mikrometer beträgt und ihre spezifische Oberfläche zwischen 0,1 und 300 Quadratmeter/Gramm, vorzugsweise zwischen 0,5 und 50 Quadratmeter/Gramm beträgt.

4.  Verfahren nach einem der Ansprüche 1 bis 3, **dadurch gekennzeichnet, dass** der Vorläuferstoff gebildet wird, indem zwei unterschiedliche Lösungen beigegeben werden, die jeweils wenigstens ein einem Lösungsmittel beigemischtes Reagens enthalten, wobei das Reagens einer ersten Lösung unter Salzen von Übergangsmetallen, Erdalkalimetallen und Lanthaniden, insbesondere unter den Nitraten, Sulfaten und Chloriden dieser Elemente, ausgewählt wird, das Reagens der zweiten Lösung unter der Oxalsäure, der Zitronensäure, dem Ammoniumoxalat, dem Ammoniumcarbonat, dem Natriumcarbonat, dem Kaliumcarbonat, dem Ammoniak und den organischen Basen ausgewählt wird, wobei das Lösungsmittel jeder Lösung destilliertes Wasser aufweist und die Konzentration der Reagenzien in jeder Lösung zwischen 0,2 und 2 mol/l beträgt.

5.  Verfahren nach Anspruch 4, **dadurch gekennzeichnet, dass** das Lösungsmittel außerdem einen Alkohol oder Polyalkohol umfasst, wobei im Lösungsmittel das Volumenverhältnis des Alkohols oder Polyalkohols und des destillierten Wassers für die erste Lösung zwischen 0 und 60% und für die zweite Lösung zwischen 0 und 100% beträgt.

6.  Verfahren nach den Ansprüchen 4 oder 5, **dadurch gekennzeichnet, dass** die Zugabe einer Lösung zur anderen in kontrollierter Weise mittels einer peristaltischen Pumpe erfolgt, deren Förderleistung zwischen 1 und 1000 ml/min eingestellt wird.

7.  Verfahren nach einem der Ansprüche 1 bis 6, **dadurch gekennzeichnet, dass** der Vorläuferstoff vom Ausfällungsmilieu getrennt und dann gewaschen und getrocknet wird.

8.  Verfahren nach Anspruch 7, **dadurch gekennzeichnet, dass** der Vorläuferstoff mehrmals, vorzugsweise vier- bis sechsmal, mittels eines Volumens von etwa 1 Liter destillierten Wassers pro 100g Vorläuferstoff gewaschen wird.

9.  Verfahren nach den Ansprüchen 7 oder 8, **dadurch gekennzeichnet, dass** vor dem Trocknen der Vorläuferstoff mit 95%igem Äthanol gewaschen wird, um den Trocknungsvorgang zu optimieren.

10. Verfahren nach einem der Ansprüche 7 bis 9, **dadurch gekennzeichnet, dass** der Vorläuferstoff bei einer zwischen 50 und 90°C liegenden Temperatur 10 bis 30 Stunden lang getrocknet wird.

11. Verfahren nach einem der Ansprüche 7 bis 10, **dadurch gekennzeichnet, dass** nach dem Trocknungsvorgang die Teilchen des Vorläuferstoffs dahin kalibriert werden, dass sie eine zwischen 100 und 500 Mikrometer liegende Größe erreichen, insbesondere durch Zwangssiebung.

**12.** Verfahren nach einem der Ansprüche 1 bis 11, **dadurch gekennzeichnet, dass** auf den Hochtemperaturschritt der thermischen Behandlung eine Abkühlung des erhitzten oxidierten Vorläuferstoffs folgt, während der der Vorläuferstoff abgekühlt wird, sei es rasch, insbesondere durch Eintauchen, oder langsam mit einer zwischen 50 und 200°C/h liegenden Geschwindigkeit, auf eine Weise, die die anfängliche allgemeine Form der Teilchen bewahrt.

**13.** Verfahren nach einem der Ansprüche 1 bis 12, **dadurch gekennzeichnet, dass** zur Zusammenballung des Oxidpulvers und der thermisch abbaubaren Additive:

- Körner, deren Größe die Größe der Oxidteilchen übersteigt, gebildet werden, indem die Additive dem Oxidpulver beigegeben werden; und
- die erhaltenen Körner zusammengedrückt werden.

**14.** Verfahren nach Anspruch 13, **dadurch gekennzeichnet, dass** die thermisch abbaubaren Additive zusätzlich zum Streckungsmittel ein Bindemittel, das dazu bestimmt ist, die Oxidpulverteilchen zu Körnern zusammenzuballen, und ein Schmiermittel, das dazu bestimmt ist, die Oberflächenreibungen der Körner zu verringern, umfassen.

**15.** Verfahren nach Anspruch 14, **dadurch gekennzeichnet, dass** für die Beigabe der Additive zum Pulver:

- das Oxidpulver mit dem Streckungsmittel durch 10- bis 20-minütiges, vorzugsweise 12- bis 15-minütiges, mechanisches Kneten pulverförmig vermischt wird;
- der vorstehenden Mischung fortschreitend das Bindemittel teigförmig beigegeben wird, bis ein Teig auf Oxidgrundlage erzielt wird;
- dieser Teig granuliert wird; und
- dem Granulat das Schmiermittel beigegeben wird.

**16.** Verfahren nach Anspruch 15, **dadurch gekennzeichnet, dass** die Granulierung erfolgt, indem der Teig, dessen Sprödheit eventuell durch Trocknung erhöht wird, durch ein Sieb gedrückt wird.

**17.** Verfahren nach Anspruch 16, **dadurch gekennzeichnet, dass** die Zwangssiebung in zwei aufeinanderfolgenden Durchgängen durch zwei Siebe zunehmender Feinheit erfolgt, wobei zwischen den beiden Durchgängen das Granulat getrocknet wird.

**18.** Verfahren nach Anspruch 17, **dadurch gekennzeichnet, dass** die beiden Siebe Öffnungen von ungefähr 2 mm bzw 1 mm Maschenweite aufweisen.

**19.** Verfahren nach einem der Ansprüche 1 bis 18, **dadurch gekennzeichnet, dass** das Streckungsmittel unter den Laktose-, Zellulose- und Stärkepulvern ausgewählt wird, wobei die mittlere Größe der Streckungsmittelteilchen unter 50 Mikrometer, vorzugsweise zwischen 30 und 40 Mikrometer, liegt, und dass das Massenverhältnis des Streckungsmittels zum Oxidpulver zwischen 5 und 50%, vorzugsweise zwischen 10 und 20%, beträgt.

**20.** Verfahren nach einem der Ansprüche 14 bis 19, **dadurch gekennzeichnet, dass** das Bindemittel unter dem PVP (Polyvinylpyrrolidon), der Saccharose und der HPMC (Hydroxylpropylmethylzellulose) ausgewählt wird, wobei dieses Bindemittel in einem Lösungsmittel in einer Konzentration von ungefähr 150 g/l für das PVP, 500 g/l für die Saccharose und 20 g/l für die HPMC gelöst ist, und dass das Massenverhältnis des Bindemittels zum Oxidpulver zwischen 1 und 7% liegt.

**21.** Verfahren nach einem der Ansprüche 14 bis 20, **dadurch gekennzeichnet, dass** das Bindemittel gelöstes Latex aufweist.

**22.** Verfahren nach einem der Ansprüche 14 bis 21, **dadurch gekennzeichnet, dass** das Schmiermittel unter dem Vaselineöl und dem Stearinsäurepulver ausgewählt wird und dass das Massenverhältnis des Schmiermittels zum Oxidpulver zwischen 5 und 25% für das Vaselineöl und zwischen 0,1 und 1% für die Stearinsäure beträgt.

**23.** Verfahren nach den Ansprüchen 15 und 22 in Kombination miteinander, **dadurch gekennzeichnet, dass** bei Verwendung von Vaselineöl als Schmiermittel das Vaselineöl über dem Granulat zerstäubt wird und dass bei Verwendung von Stearinsäurepulver als Schmiermittel das Stearinsäurepulver durch 5- bis 10-minütiges mechanisches Kneten mit dem Granulat vermengt wird.

**24.** Verfahren nach einem der Ansprüche 13 bis 23, **dadurch gekennzeichnet, dass** der Druck zum Zusammenpressen des Granulats zwischen 1500 und 2500 bar beträgt.

**25.** Verfahren nach einem der Ansprüche 1 bis 24, **dadurch gekennzeichnet, dass** die Keramikmasse durch Erhitzen auf eine zwischen 600 und 1500°C liegende Temperatur gesintert wird, wobei diese Temperatur 1 bis 3 Stunden lang beibehalten wird, und dann die Keramikmasse abgekühlt wird.

**26.** Verfahren nach Anspruch 25, **dadurch gekennzeichnet, dass** die Temperaturanstiegsgeschwindigkeit und die Abkühlgeschwindigkeit zwischen 20 und 200°C/h liegen.

**Claims**

**1.** Process for the manufacture of a catalytic converter comprising a ceramic mass (18) with catalytic action forming its own support, referred to as the final solid mass, according to which:

- an oxide powder, selected from the oxides of transition metals, of alkaline-earth metals, and of lanthanides, is prepared by forming, by precipitation, a precursor establishing the shape and size of the oxide particles, comprising at least a simple compound based on one anion and one cation, or a mixed compound based on one anion and several different cations, and then treating the precursor thermally to form the oxide powder thus comprising at least one simple or mixed oxide,

- a raw solid ceramic mass having dimensions at least substantially equal to the dimensions of the solid mass is formed by agglomerating the powder with thermally degradable additives comprising at least one extender additive in powder form, and

- the final solid mass is formed by sintering the raw solid mass by heating, the additives being thermally degradable at a temperature below the sintering temperature of the raw solid mass, the extender additive creating, by thermal degradation, pores in the final solid mass the size of which is dictated by that of the particles of the extender additive,

**characterized in that** the said thermal treatment comprises two successive heating stages, one referred to as the low-temperature stage and the other referred to as the high-temperature stage,
the low-temperature stage comprising a first stage of rapid temperature increase in the course of which the precursor is heated to a temperature of 150°C at a rate of from 100 to 200°C/h in order to dehydrate the precursor, and a second stage of slow temperature increase in the course of which the precursor is heated to a final temperature of between 300 and 500°C at a rate of 10°C/h in order to decompose the precursor into oxide(s) whilst retaining the initial general shape of the particles, the final temperature being maintained for 0.5 to 2 hours, the high-temperature stage comprising the heating of the oxidized precursor to a temperature of between 300 and 1000°C, either instantaneously or progressively at a rate of 150°C/h, in order to homogenize the oxides by ion diffusion.

**2.** Process according to Claim 1, **characterized in that** the oxide particles have shapes selected from acicular and spheroidal shapes, platelets, and regular polyhedrons.

**3.** Process according to Claim 2, **characterized in that** the average size of the oxide particles is between 0.1 and 10 μm and their specific surface area is between 0.1 and 300 $m^2$/g, preferably between 0.5 and 50 $m^2$/g.

**4.** Process according to any one of Claims 1 to 3, **characterized in that** the precursor is formed by adding two separate solutions each containing at least one reagent mixed with a solvent, the reagent of a first solution being selected from the salts of transition metals, of alkaline-earth metals and of lanthanides, particularly from the nitrates, the sulphates and the chlorides of these elements, the reagent of the second solution being selected from oxalic acid, citric acid, ammonium oxalate, ammonium carbonate, sodium carbonate, potassium carbonate, ammonia and the organic bases, the solvent of each solution comprising distilled water, the concentration of the reagents in each solution being between 0.2 and 2 moles/l.

**5.** Process according to Claim 4, **characterized in that** the solvent comprises, in addition, an alcohol or a polyol, the volume ratio of alcohol or polyol and of distilled water in the solvent being between 0 and 60% for the first solution and between 0 and 100% for the second solution.

6. Process according to Claim 4 or Claim 5, **characterized in that** the addition of one solution to the other is controlled by means of a peristaltic pump the throughput of which is regulated between 1 and 1000 ml/mn.

7. Process according to any one of Claims 1 to 6, **characterized in that** the precursor is separated from the precipitation medium and this precursor is then washed and dried.

8. Process according to Claim 7, **characterized in that** the precursor is washed several times, preferably 4 to 6 times, by means of a volume of distilled water of approximately 1 litre per 100 g of precursor.

9. Process according to Claim 7 or Claim 8, **characterized in that**, prior to drying, the precursor is washed with 95% ethanol to optimize drying.

10. Process according to any one of Claims 7 to 9, **characterized in that** the precursor is dried, at a temperature of between 50 and 90°C, for from 10 to 30 hours.

11. Process according to any one of Claims 7 to 10, **characterized in that**, after drying, the precursor particles are calibrated to attain a size of between 100 and 500 µm, particularly by forced screening.

12. Process according to any one of Claims 1 to 11, **characterized in that** the high-temperature step of the thermal treatment is followed by cooling of the heated oxidized precursor, in the course of which it is cooled either rapidly; particularly by immersion, or slowly at a rate of between 50 and 200°C/h, so as to preserve the initial general shape of the particles.

13. Process according to any one of Claims 1 to 12, **characterized in that**, in order to agglomerate the oxide powder and the thermally degradable additives:

  - granules of a size larger than that of the oxide particles are formed by adding additives to the oxide powder, and

  - the granules obtained are compressed.

14. Process according to Claim 13, **characterized in that** the thermally degradable additives comprise, in addition to the extender additive, a binding additive for agglomerating the particles of oxide powder into granules and a lubricating additive for reducing the surface friction of the granules.

15. Process according to Claim 14, **characterized in that**, in order to add the additives to the powder:

  - the oxide powder is mixed with the extender in powder form by mechanical mixing for from 10 to 20 min., preferably for from 12 to 15 min.,

  - the binder is added to the previous mixture gradually in paste form until an oxide-based paste is obtained,

  - the paste is granulated, and

  - the lubricant is added to the granules.

16. Process according to Claim 15, **characterized in that** the granulation is performed by forced screening of the paste, the friability of which is optionally increased by drying.

17. Process according to Claim 16, **characterized in that** the forced screening is performed in two successive steps through two screens of increasing fineness, the granules being dried between the two steps.

18. Process according to Claim 17, **characterized in that** the two screens comprise calibration openings of approximately 2 mm and 1 mm, respectively.

19. Process according to any one of Claims 1 to 18, **characterized in that** the extender is selected from lactose, cellulose, and starch powders, the mean particle size of the extender being less than 50 µm, preferably between

30 and 40 μm, and **in that** the mass ratio of the extender relative to the oxide powder is between 5 and 50%, preferably between 10 and 20%.

20. Process according to any one of Claims 14 to 19, **characterized in that** the binder is selected from PVP (polyvinyl pyrrolidone), sucrose, and HPMC (hydroxylpropylmethyl cellulose), the binder being in solution in a solvent with a concentration of approximately 150 g/l for PVP, 500 g/l for sucrose, and 20 g/l for HPMC, and **in that** the mass ratio of the binder relative to the oxide powder is between 1 and 7%.

21. Process according to any one of Claims 14 to 20, **characterized in that** the binder comprises latex in solution.

22. Process according to any one of Claims 14 to 21, **characterized in that** the lubricant is selected from liquid paraffin and stearic acid powder, and **in that** the mass ratio of the lubricant relative to the oxide powder is between 5 and 25% for liquid paraffin and between 0.1 and 1% for stearic acid.

23. Process according to Claims 15 and 22 taken together, **characterized in that**, when the lubricant is liquid paraffin, it is sprayed onto the granules and **in that**, when the lubricant is stearic acid powder, it is mixed with the granules by mechanical mixing for from 5 to 10 minutes.

24. Process according to any one of Claims 13 to 23, **characterized in that** the pressure for the compression of the granules is between 1500 and 2500 bar.

25. Process according to any one of Claims 1 to 24, **characterized in that** the ceramic mass is sintered by heating to a temperature of between 600 and 1500°C, this temperature being maintained for from 1 to 3 hours, and the ceramic mass is then cooled.

26. Process according to Claim 25, **characterized in that** the rates of temperature increase and of cooling are between 20 and 200°C/h.